Europäisches Patentamt

(19) European Patent Office

Office européen des brevets

(11) Publication number: **0 159 127**
**A1**

(12) **EUROPEAN PATENT APPLICATION**

(21) Application number: **85301532.9**

(22) Date of filing: **06.03.85**

(51) Int. Cl.⁴: **B 60 T 11/16**
**B 60 T 11/22, B 60 T 11/26**

(30) Priority: **12.03.84 GB 8406362**
**17.04.84 GB 8409955**

(43) Date of publication of application:
**23.10.85 Bulletin 85/43**

(84) Designated Contracting States:
**DE FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Wimbush, Maurice John**
**19 Canon Young Road**
**Whitnash Leamington Spa Warwickshire(GB)**

(72) Inventor: **Crawford, Peter Frederick**
**The Gables Stoneleigh Road**
**Bubbenhall Coventry Warks(GB)**

(74) Representative: **Adkins, Michael et al,**
**Withers & Rogers 4 Dyer's Buildings**
**Holborn London, EC1N 2JT(GB)**

(54) **Hydraulic master cylinder.**

㊾ The master cylinder comprises a body 13 and a piston 11 having a piston head sealed with the body by a primary seal and movable in the body to pressure a high pressure chamber 25 for actuating a hydraulic device such as a vehicle clutch. The piston also has a tail portion 21 sealed with the body by a secondary seal 22. An annular low pressure chamber 49 is defined by the body and the piston between the primary and secondary seals, the body having a main feed port (18) opening into the low pressure chamber 49 for connection to a hydraulic fluid reservoir 27. The low pressure chamber 49 is divided into two portions 34, 35 by an auxiliary seal 16 which sealingly engages the body and the piston. The main feed port 18 lies between the primary seal 23 and the auxiliary seal. An auxiliary feed port 19 is provided in the body and opens into the portion 35 of the low pressure chamber 49 to connect said portion 13 to the reservoir.

FIG. 1.

## HYDRAULIC MASTER CYLINDER

This invention relates to hydraulic master cylinders, particularly but not exclusively for vehicle hydraulic braking systems.

A typical known hydraulic master cylinder comprises a body, a piston having a piston head sealed with the body by a primary seal and movable in the body to pressurise a high pressure chamber for connection to a hydraulically operated device, such as a vehicle brake, a piston tail portion sealed with the body by a secondary seal and an annular low pressure chamber defined by the body and the piston between the primary seal and the secondary seal, the body having a main feed port opening into the low pressure chamber for connection to a hydraulic fluid reservoir.

A problem arises if air should leak past the secondary seal into the low pressure chamber. Air bubbles collect in the vicinity of the primary seal and can be swept past the primary seal into the high pressure chamber. This causes sponginess of operation and in a vehicle braking system may lead to brake failure. This problem is found mainly in master cylinders which are installed with the axis of the master cylinder substantially vertical, the high pressure chamber being above the low pressure chamber and one object of the invention is to reduce this problem.

According to one aspect of the present invention, in a master cylinder of the kind described, the low pressure chamber is divided into two portions by an
auxiliary seal which sealingly engages the body and the
piston, the main feed port being between the primary
seal and the auxiliary seal and an auxiliary feed port
being provided in the body and opening into the portion
of the low pressure chamber between the auxiliary seal
and the secondary seal for connection of said portion
of the low pressure chamber to the hydraulic fluid reservoir.

Preferably the volume of said portion of the
low pressure chamber varies during at least part of the
working stroke of the piston.

The auxiliary seal may be fixed relative to
the body and the volume of the said portion of the low
pressure chamber arranged to decrease during movement
of the piston in the direction to increase pressure in
the high pressure chamber, in which case the auxiliary
seal may be in sliding engagement with an intermediate
cylindrical portion of the piston which locates in the
piston tail portion.

Alternatively, the piston may be slidable in
the auxiliary seal and the auxiliary seal is slidable
in the body over a limited stroke, in which case the auxiliary
seal may abut a collar which is itself slidable in the
body over a limited stroke.  The collar may be engageable
with the piston to limit movement of the piston in the
direction to reduce pressure in the high pressure chamber.
A spacing spring maybe interposed between the auxiliary
seal and the secondary seal.

Preferably the auxiliary seal presents a convex surface towards the portion of the low pressure chamber between the auxiliary seal and the secondary seal. The convex surface preferably leads towards the auxiliary feed port. A portion of said auxiliary seal may lie within the auxiliary feed port.

Preferably the secondary seal provides sealing between the low pressure chamber portion between the auxiliary seal and the secondary seal and ambient air.

There is also provided according to another aspect of the invention a master cylinder according to said one aspect in combination with a hydraulic fluid reservoir, the reservoir comprising means for separating a volume of fluid which is directly connected to the main feed port from a volume of fluid which is directly connected to the auxiliary feed port.

According to yet another aspect of the invention there is provided a seal for location in a hydraulic master cylinder (preferably a hydraulic master cylinder as set out in any of the seven immediately preceding paragraphs), the seal being of annular form having an outer periphery for sealing engagement with a body of the master cylinder and an inner periphery for sealing engagement with a piston of the master cylinder characterised in that a convex surface is formed on the seal which is arranged, in use, to face towards a chamber of the master cylinder so as to direct any air entering the chamber towards a fluid feed port.

In one embodiment the seal has a tapered bore which terminates at said inner periphery. Preferably the tapered bore and the convex surface may meet to define a sealing lip. Preferably the seal has a surface opposite the convex surface which engages a reinforcing element. The reinforcing element may be positioned in a recess formed in the opposite surface of the seal. Preferably the seal is formed with a circumferential bead for location in a groove in the body of the master cylinder.

In another embodiment, said convex surface is formed with an annular recess for receiving a spacer.

Master cylinders in accordance with the invention will now be described by way of example with reference to the accompanying drawings in which:-

Fig. 1 is a cross-section through a tandem master cylinder and hydraulic fluid reservoir according to the invention;

Fig. 2 is a view in the direction of arrow A in Fig. 1 with the reservoir removed;

Fig. 3 is a cross-section through an alternative tandem master cylinder and hydraulic fluid reservoir according to the invention;

Fig. 4 is a plan view of an auxiliary seal for the master cylinder of Figs. 1 and 2 drawn to a larger scale;

Fig. 5 is a cross-section of the seal of Fig. 4 on the line V - V in Fig. 4;

Fig. 5A is a cross section through part of an alternative Fig. 4 type seal;

Fig. 6 is an underneath plan view of an auxiliary seal for the master cylinder of Fig. 3 drawn to a larger scale; and

Fig. 7 is a cross section of the seal of Fig. 6 on the line VII - VII in Fig. 6.

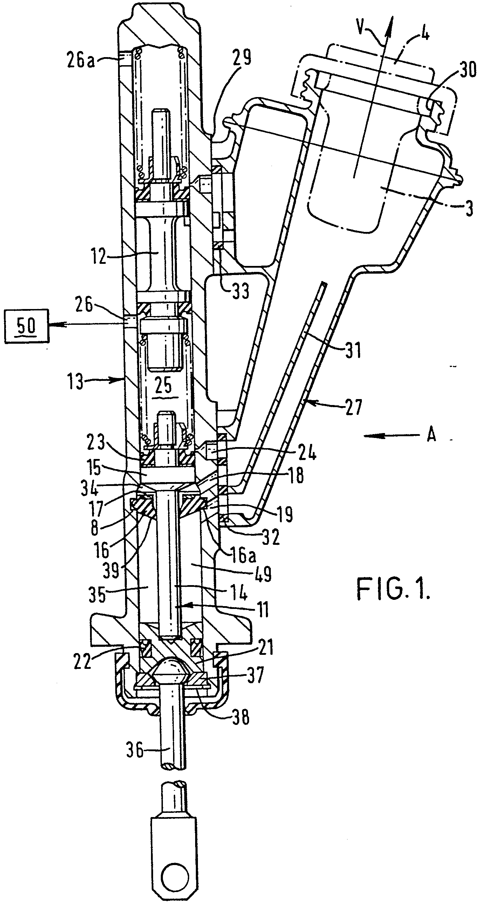

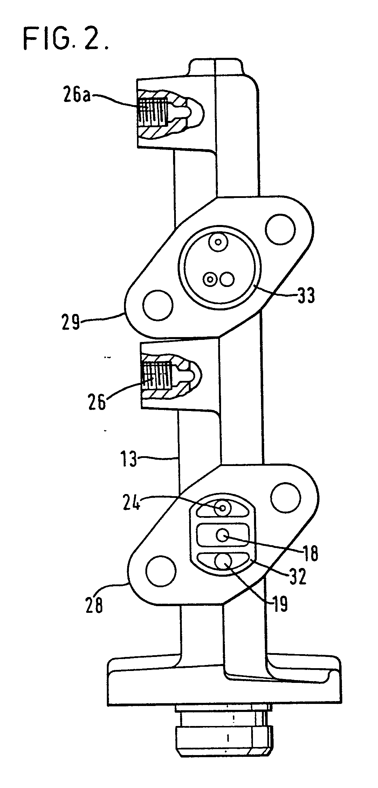

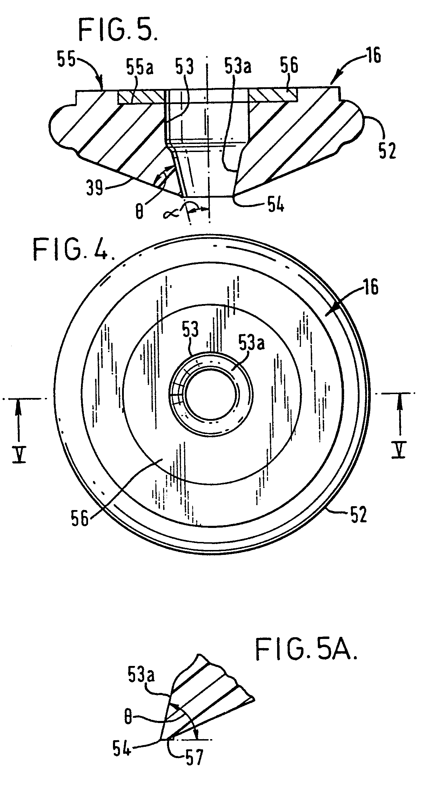

Referring to Figs. 1 and 2, the tandem master cylinder shown includes a primary piston 11 and a secondary piston 12, both slidable in a body 13 in the manner of a conventional tandem master cylinder. The secondary piston 12 is entirely conventional and requires no further description. The primary piston 11 differs from the conventional in that it has an intermediate cylindrical portion 14 of smaller diameter than the piston head 15. An auxiliary seal 16 of rubber is reinforced by a washer 17 and secured in the bore of body 13 by a groove 8 between a main feed port 18 and an auxiliary feed port 19. The auxiliary seal 16 is described in more detail below with reference to Figs 4 and 5. The intermediate cylindrical portion 14 is a spigot location in a piston tail portion 21 which carries a secondary or atmospheric seal 22.

The auxiliary seal 16 is in sealing sliding engagement with the intermediate cylindrical portion 14.

The piston tail portion 21 is of larger diameter than the piston head 15 to allow the primary or pressure seal 23 on the head 15 to clear the feed ports 18 and 19 during assembly.

A reservoir 27 is secured to the body 13 at flanges 28 and 29 with the axis of the filler cap orifice 30 substantially vertical, as indicated by arrow V.

The reservoir 27 incorporates means in the form of an internal wall 31 for separating a volume of fluid which is directly connected to the main feed port 18 from a volume of fluid which is directly connected to the auxiliary feed port 19. Rubber gaskets 32 and 33 seal the reservoir 27 at the flanges 28 and 29 respectively and these are shown superimposed on the flanges 28 and 29 in Fig. 2. Gasket 32 also seals the wall 31. The orifice 30 is closed by means of a float level switch 3 on a cap 4.

A recuperation port 24 connects the reservoir 27 to the primary high pressure chamber 25 which is arranged for connection to a hydraulically operated device 50, in this case vehicle brakes, through a first outlet port 26 shown diagrammatically in Fig. 1(the actual position being as shown in Fig. 2)which opens into the primary chamber 25 tangentially on the same side as the reservoir 27. A second outlet port 26a is formed towards the upper end of the cylinder in known manner.

The body 13 and the primary piston 11 between the primary seal 23 and the secondary seal 22 define an annular low pressure chamber 49 divided by the auxiliary seal 16 into an upper portion 34 between the primary seal 23 and the auxiliary seal 16 and a lower portion 35 between the auxiliary seal 16 and the secondary seal 22. Hence the main feed port 18 is between the primary seal and the auxiliary seal 16 and the auxiliary feed port 19 opens into the lower portion 35 between the auxiliary seal 16 and the secondary seal 22. The secondary seal 22 provides a seal between the lower portion 35 and the ambient air acting at atmospheric pressure on the other side of the seal, thereby inhibiting leakage of air into the low pressure chamber.

A pushrod 36 is retained by a washer 37 and a circlip 38 and is arranged for connection to a driver's brake pedal.

When the primary piston 11 is moved upwards by the pushrod 36, the primary seal 23 wipes over the recuperation port 24 to increase pressure in the primary high pressure chamber 25 and direct fluid to the appropriate brake through the port 26.

If air enters the lower chamber portion 35 past the secondary seal 22, it is directed into the fluid reservoir 27 through auxiliary feed port 19 by the auxiliary seal 16. To assist this, the seal 16 has a frusto-conical surface 39 so as to present a convex surface towards the lower chamber portion 35. Part 16a of the seal 16 lies within the auxiliary feed port 19. Furthermore, the volume of the lower chamber portion 35 varies during the working stroke of the piston 11, in this case decreasing during movement of the piston 11 in the direction to increase pressure in the primary high pressure chamber 25. The flow of hydraulic fluid out of the lower chamber portion 35 through the auxiliary feed port 19 during this part of the working stroke of the piston helps to sweep air bubbles into the reservoir 27. The baffle 31 helps to ensure that only air-free hydraulic fluid can enter the upper chamber portion 34 through the main feed port 18.

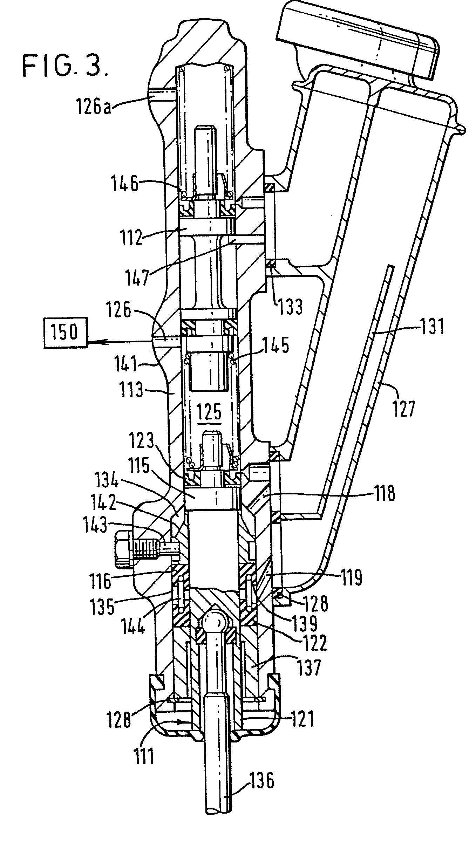

Referring now to Fig. 3, the alternative master cylinder has certain features which are similar to those shown in Figs. 1 and 2 so that where appropriate the same reference numerals will be used but with the addition of 100. This master cylinder includes a body 113 with a primary piston 111 movable in the body to pressurise a high pressure primary chamber 125 for connection to a brake through an outlet port 126 (shown diagrammatically) in a boss 141. A further upper outlet port 126a also provided. The piston head 115 is sealed with the body 113 by a primary seal 123 and there is a conventional secondary piston 112.

The primary piston 111 also has a tail portion 121 which is sealed to the body 113 by a secondary seal 122 which is itself retained by a spacer 137 and circlip 138.

A low pressure chamber 149 is divided into an upper portion 134 and a lower portion 135 by an auxiliary seal 116 which seals with the body 113 and the piston 111. A main feed port 118 is between the primary seal 123 and the auxiliary seal 116 so as to open into the upper chamber portion 134. An auxiliary feed port 119 is between the auxiliary seal 116 and the secondary seal 122 and opens into the lower chamber portion 135. The secondary seal 122 seals between the lower portion 135 and ambient air as in Fig 1. Both feed ports 118 and 119 are for connection to a hydraulic fluid reservoir 127. Preferably they connect with separate volumes of fluid in the reservoir, as provided by the internal wall 131 or by a tube connected to the auxiliary feed port 119 and which extends towards the top of the reservoir. Alternatively, separate reservoirs may be provided for each part 118 and 119.

The auxiliary seal 116 abuts a collar 142 which is slidable in the body 113 over a stroke which is limited by a peg 143 engaged in a groove in the outer periphery of the collar 142. In the position shown in Fig. 3 a shoulder between the piston head 115 and the tail portion 121 engages the collar 142 on an axial extension. This provides a stop to limit movement of the primary piston 111 in the direction to reduce pressure in the primary high pressure chamber 125. A spacing spring 144 is interposed between the auxiliary seal 116 and the secondary seal 122. This spring 144 has a lower preload than the usual return 145 in the primary chamber 125 which in turn has a lower preload than the usual return spring 146 for the secondary piston 112 which returns to abut a pin 147.

Apart from a groove to receive the spring 144, the auxiliary seal 116 presents a convex surface 139 to the lower chamber portion 122. Conveniently, the auxiliary seal 116 is identical to the secondary seal 122 but inserted the opposite way round in the body 113.

The master cylinder is for mounting with its axis substantially vertical, as shown in Fig. 3. To pressurise the primary chamber 125, the piston 111 is moved upwards by a pushrod 136 arranged for connection to a driver's brake pedal. Under the load of spring 144 the auxiliary seal 116 moves upwards in the body 113 over a limited stroke, pushing the collar 142 with it until the collar reaches the upward limit of its stroke permitted by the peg 143. The piston 111 then moves in the auxiliary seal 116 as it continues its upwards movement.

On the downward stroke of the piston 111 the auxiliary seal 116 remains in its upper position until it is moved downwards by the collar 142 when this is abutted by the piston head 115.

If any air should enter the lower chamber portion 135, it will be prevented from entering the upper chamber portion 134 by the auxiliary seal 116 and can escape through the auxiliary feed port 119. Since the volume of the lower chamber portion 135 is made to vary during part of the working stroke of the piston 111 by reducing when the auxiliary seal 116 moves downwards, the air is also forcibly expelled through the auxiliary feed port 119.

Reference is now made to Figures 4 to 7 which illustrate enlarged views of auxiliary seals 16,116.

In Figs. 4 and 5 it can be seen that the seal 16 is of annular form. The seal is formed form a suitable resilient material and has a peripheral bead 52 which locates in the groove 8 in the cylinder body. The lower face 39 of the seal as viewed in the drawings is of frusto conical form although it may be of other convex shape eg spherical. The seal has a cylindrical bore 53 leading to a bore 53a which tapers towards the axis of the seal (towards the tail portion 21 of the piston) at an angle $\alpha$ of around 10° and meets the convex surface 39 at an angle $\Theta$ of around 60° to form sharp sealing lip 54 which sealingly engages the cylindrical portion 14 of the piston 11.

The upper surface 55 of the seal 16 is formed with an annular recess 55a in which the reinforcing washer 17 (made of metal or plastics) is suitably retained eg. by bonding. Fig 5a shows an alternative lip form where the bore 53a terminates at an annular surface 57 to increase the angle $\Theta$ to around 80° for improved wear characteristics.

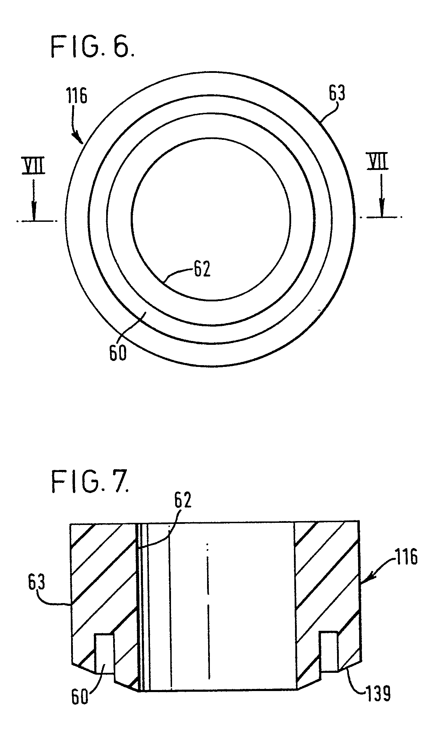

In Figs. 6 and 7 the seal 116 is of annular form and has its convex lower surface 139 formed with a groove 60 for locating the spacing spring 144. The surface 139 is frusto conical, spherical or of other convex form. The internal bore 62 in this seal and the periphery 63 are cylindrical.

- 12 -

0159127

CLAIMS:

1.      A hydraulic master cylinder comprising a body (13; 113), a piston (11;111) having a piston head (15;115) sealed with the body by a primary seal (23; 123) and movable in the body to pressurise a high pressure chamber (25;125) for connection to a hydraulically operated device (50; 150), a piston tail portion (21;121) sealed with the body by a secondary seal (22;122) and an annular low pressure chamber (49;149) defined by the body and the piston between the primary seal and the secondary seal, the body having a main feed port (18;118) opening into the low pressure chamber (49,149) for connection to a hydraulic fluid reservoir (27;127), characterised in that the low pressure chamber (49;149) is divided into two portions (34,35; 134, 135) by an auxiliary seal (16, 116) which sealingly engages the body (13;113) and the piston (11,111), the main feed port (18,118) being between the primary seal (23;123) and the auxiliary seal (16; 116) and an auxiliary feed port (19; 119) being provided in the body and opening into the portion (35; 135) of the low pressure chamber (49;149) between the auxiliary seal (16; 116) and the secondary seal (22;122) for connection of said portion (35;135) of the low pressure chamber (9) to the hydraulic fluid reservoir (27, 127).

2.      A master cylinder according to Claim 1 characterised in that the volume of said portion (35;135) of the low pressure chamber (49,149) varies during at least part of the working stroke of the piston (11,111).

3.    A master cylinder according to Claim 2 characterised in that the auxiliary seal (16; 116) is fixed relative to the  body (13;113) and the volume of said portion (35; 135) of the low pressure chamber (49;149) decreases during movement of the piston (11;111) in the direction to increase pressure in the high pressure chamber (25;125)

4.    A master cylinder according to Claim 3 characterised in that the auxiliary seal (16; 116) is in sliding engagement with an intermediate cylindrical portion (14;114) of the piston (11;111) which locates in the piston tail portion (21;121).

5.    A master cylinder according to Claim 2 characterised in that the piston (111) is slidable in the auxiliary seal (116) and the auxiliary seal is slidable in the body (113) over a limited stroke.

6.    A master cylinder according to Claim 5 characterised in that the auxiliary seal (116) abuts a collar (142) which is slidable in the body (113) over a limited stroke.

7. :\    A master cylinder according to Claim 6 characterised in that  the collar (142) is engageable with the piston to limit movement of the piston (111) in the direction to reduce pressure in the high pressure chamber (125).

8.    A master cylinder according to any one of Claims 5 to 7 characterised in that a spacer (144) is interposed

0159127

between the auxiliary seal (116) and the secondary seal (112).

9.    A master cylinder according to any preceding claim characterised in that the auxiliary seal (16,116) presents a convex surface (39, 139) towards said portion (34, 134) of the low pressure chamber (49, 149) between the auxiliary seal (16, 116) and the secondary seal (22,122).

10.    A master cylinder according to Claim 9 characterised in that the convex surface (39, 139) leads towards the auxiliary feed port (19,119).

11.    A master cylinder according to Claim 10 characterised in that a portion (16a) of the auxiliary seal (16) lies within the auxiliary feed port (19).

12.    A hydraulic master cylinder according to any preceding claim characterised in that the secondary seal (22, 122) provides sealing between the low pressure chamber portion (35, 135) between the auxiliary seal (16, 116) and the secondary seal and ambient air.

13.    A master cylinder according to any preceding Claim in combination with a hydraulic fluid reservoir (27,127) characterised in that the reservoir (27, 127) comprises means (31,131) for separating a volume of fluid which is directly connected to the main feed port (18,118) from a volume of fluid which is directly connected to the auxiliary feed port (19, 119).

14. A seal (16, 116) for location in a hydraulic master cylinder, the seal (16, 116) being of annular form having an outer periphery (52, 63) for sealing engagement with a body (13,113) of the master cylinder and an inner periphery (54, 62) for sealing engagement with a piston (11,111) of the master cylinder characterised in that a convex surface (39, 139) is formed on the seal which is arranged, in use, to face towards a chamber (35, 135) of the master cylinder so as to direct any air entering the chamber towards a fluid feed port (19, 119).

15. A seal according to Claim 14 characterised in that the seal (16) has a tapered bore (53a) which terminates at said inner periphery (54).

16. A seal according to Claim 15 characterised in that the bore (53) and the convex surface (39) meet to define a sealing lip (54).

17. A seal according to Claim 14,15 or 16 characterised in that the seal (16) has a surface (55) opposite the convex surface (39) which engages a reinforcing element (17).

18. A seal according to Claim 17, characterised in that the reinforcing element (17) is positioned in in a recess (55a) formed in the opposite surface (55) of the seal (16).

19. A seal according to any of claims 14 to 18 characterised in that the outer periphery of the seal (16) is formed with a circumferential bead (52) for location in a groove (8) in the body (13).

20. A seal according to Claim 14 characterised in that said convex surface (139) is formed with an annular recess (60) for receiving a spacer (144).

21. A seal according to any of Claims 14 to 20 for location as an auxiliary seal in a hydraulic master according to any of Claims 1 to 13.

0159127

FIG. 1.

FIG. 2.

FIG. 3.

3 / 5

0159127

FIG.5.

FIG.4.

FIG.5A.

0159127

FIG. 6.

FIG. 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 081 319 (AUTOMOTIVE PRODUCTS PUBLIC LIMITED COMPANY) * Whole document; figure * | 1 | B 60 T 11/16<br>B 60 T 11/22<br>B 60 T 11/26 |
| A | GB-A- 979 810 (AUTOMOTIVE PRODUCTS COMPANY LIMITED) | | |
| A | DE-C- 802 494 (ADAM PLEINES) | | |
| A | US-A-3 232 628 (KARL BRAND) | | |
| A,P | FR-A-2 538 765 (AUTOMOBILES PEUGEOT) | | |

-----

| | TECHNICAL FIELDS SEARCHED (Int. Cl.4) |
|---|---|
| | B 60 T 11/00<br>B 60 T 17/00<br>F 16 D 25/00<br>F 15 B 21/00 |

The present search report has been drawn up for all claims

| Place of search | Date of completion of the search | Examiner |
|---|---|---|
| THE HAGUE | 19-06-1985 | BRAEMS C.G.T. |